# EUROPEAN PATENT SPECIFICATION

(11) **EP 3 041 075 B1**
(45) Date of publication and mention of the grant of the patent: **28.02.2018**
(21) Application number: 14841086.3
(22) Date of filing: 08.08.2014
(51) Int. Cl.: H01M 8/026, H01M 8/0258, H01M 8/124

(54) **FUEL CELL UNIT**
BRENNSTOFFZELLENEINHEIT
UNITÉ DE PILE À COMBUSTIBLE

(30) Priority: 27.08.2013 JP 2013175197
(43) Date of publication of application: 06.07.2016
(73) Proprietor: Sumitomo Precision Products Co., Ltd., Amagasaki-shi, Hyogo 660-0891 (JP)
(72) Inventor: UWANI, Hiroyuki, Amagasaki-shi Hyogo 660-0891 (JP)
(74) Representative: BRP Renaud & Partner mbB Rechtsanwälte Patentanwälte Steuerberater
(86) International application number: PCT/JP2014/004159
(87) International publication number: WO 2015/029353

(56) References cited:
- EP-A1- 1 447 869
- JP-A- 2001 110 433
- JP-A- 2002 514 343
- JP-A- 2004 241 283
- JP-A- 2004 247 305
- JP-A- 2005 190 983
- JP-A- 2007 073 514
- JP-A- 2007 115 525
- JP-A- 2008 123 707
- JP-A- 2008 123 707
- JP-A- 2013 045 553
- US-A1- 2007 054 175

## Description

### TECHNICAL FIELD

The present invention relates to planar solid oxide fuel cells (SOFCs), and in particular, to stack structures where separators and other components are stacked.

### BACKGROUND ART

Fuel cells are devices that are capable of producing electricity by using fuel. The fuel cells are roughly classified, according to types of electrolytes, into the polymer electrolyte fuel cells (PEFCs) in which a polymer thin film, such as a resin film, is used as the electrolyte, and the solid oxide fuel cells (SOFCs) in which a solid oxide is used as the electrolyte, for example. Among them, the SOFCs have recently become a focus of attention since their power generation efficiency is high.

The SOFCs include planar type ones (planar SOFCs). The planar SFOC is configured by stacking, together with separators and other components, a plurality of planar cells each including an electrolyte sandwiched between a pair of electrodes. In the SOFC, air or a gas containing oxygen (the description given herein is based on the use of air, which is usually used) and a fuel gas such as hydrogen or carbon monoxide are used to cause a reaction.

A SOFC is disclosed in Patent Document 1, for example.

In relation to the present invention, Patent Document 2 discloses a fuel cell separator which has a passage structure designed for achieving uniform distribution of the flow rate and concentration of a reactant gas.

The reactant gas passages of Patent Document 2 have a serpentine structure in which the multiple reactant gas passages extend parallel to each other and curve in a U-shape. To reduce non-uniformity in the pressure distribution and the concentration distribution which occurs in the U-shaped curves and to reduce influence which deteriorates the performance, a slit-like passage which extends across the reactant gas passages and makes the reactant gas passages communicate with each other is provided downstream of each of the U-shaped curves.

### CITATION LIST

### PATENT DOCUMENT

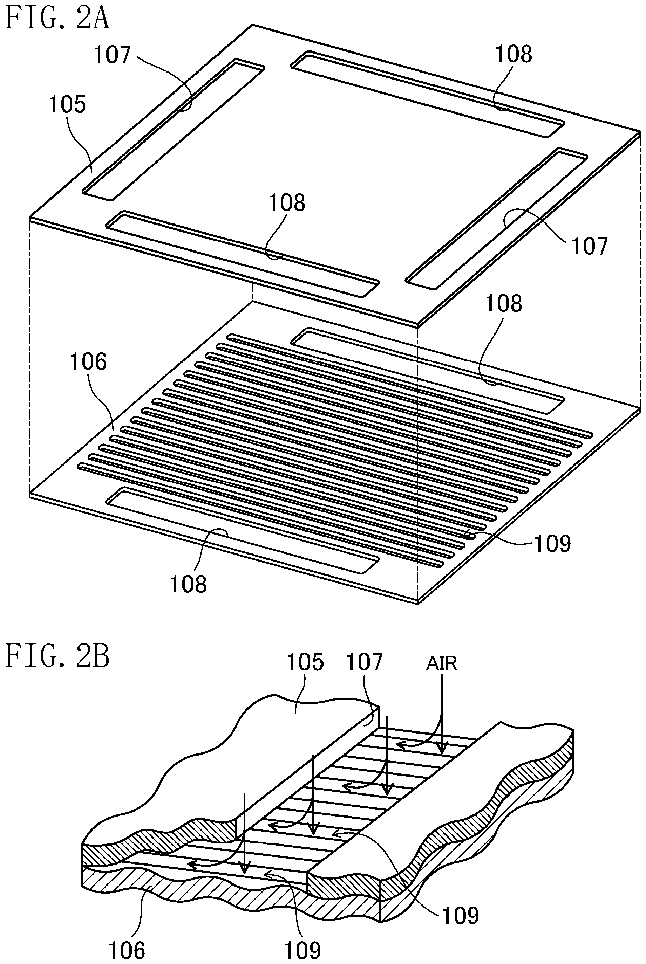

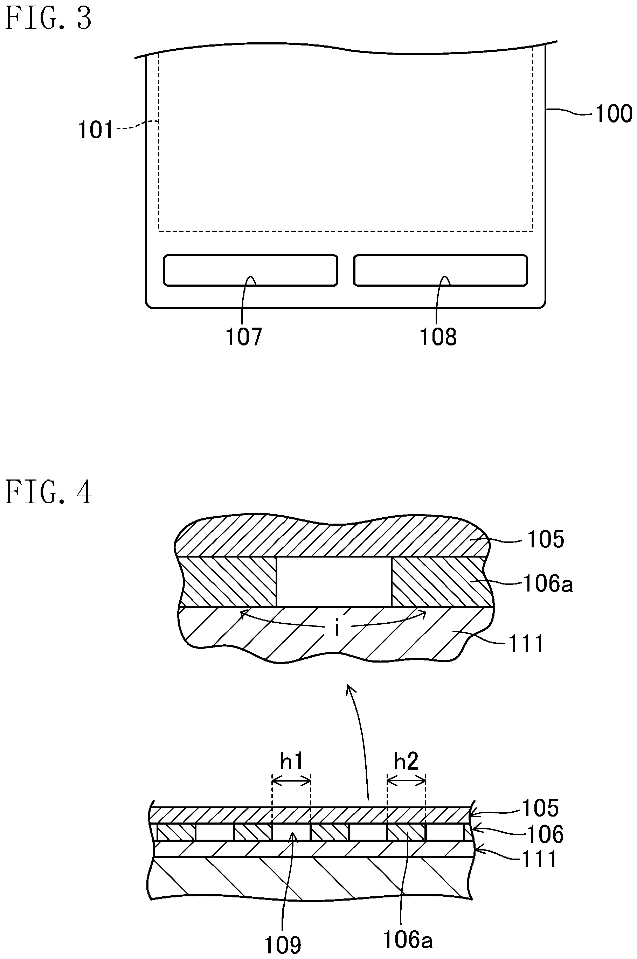

Patent Document 1: Japanese Unexamined Patent Publication No. 2002-343376
Patent Document 2: Japanese Unexamined Patent Publication No. 2006-351222
JP 2008 123707 discloses a fuel cell unit comprising a plurality of power-generating elements stacked on top of each other, the power-generating elements each including a plate-like cell having one principal surface to which an anode is connected and the other principal surface to which a cathode is connected, an anode plate stacked over and electrically connected to the anode, and a cathode plate stacked over and electrically connected to the cathode (Figure 2), wherein the cathode plate includes a plurality of first gas passages which are adjacent to each other and extend from an end portion of the cell to an opposite end portion of the cell, and thereby serve as passages for a gas containing oxygen (Figure 4, numbers 82 and 86), a plurality of second gas passages which are sandwiched between the first gas passages and the cell, which are adjacent to each other and extend in a direction intersecting an extending direction of the first gas passages, which are exposed toward the cell, and each of which communicates with at least two of the first gas passages in a vicinity of an intersection in a direction in which the cathode plate is stacked (Figure 4, number 84), a first plate in which the first gas passages are formed, and a second plate which is stacked on the first plate and in which the second gas passages are formed (Figure 4, a) and b), see also paragraphs 15-22). EP 1 447 869 discloses the same features as JP2008123707 (Figures 2, 4 and 6, paragraphs 18-35), except that the first gas passages (numbers 2 and 4, Figure 4) and the second gas passages (numbers 6) refer to the anode plate and not to the cathode plate, and are formed on a unique plate.

### SUMMARY OF THE INVENTION

### TECHNICAL PROBLEM

To increase the power generation efficiency and durability of the SOFCs, it is important to supply air to the electrode surfaces of the cells in a well-balanced manner.

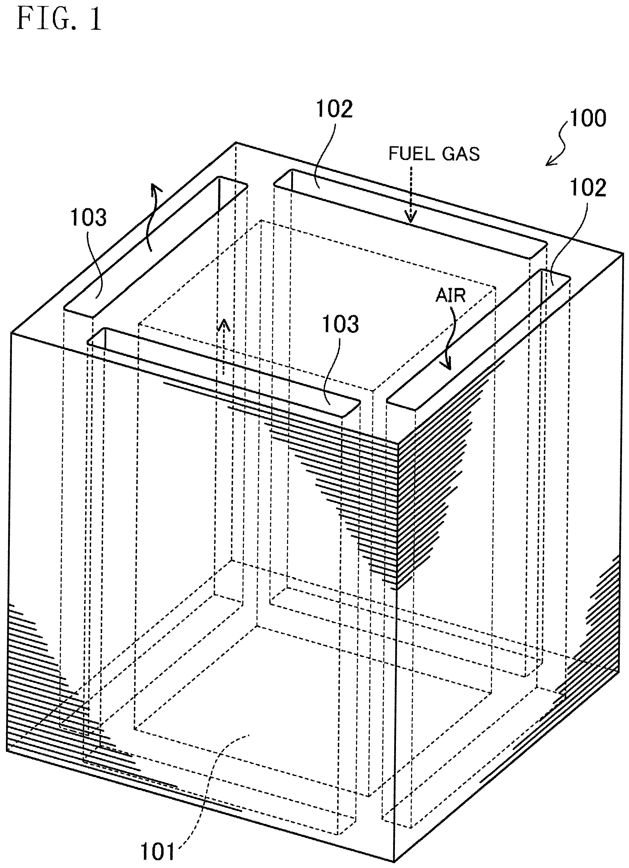

FIG. 1 shows, as an example, a main portion (a cell stack 100) of a SOFC. The cell stack 100 is in a block-shape and includes plate-like cells, separators, and other components which are stacked together. The cell stack 100 has, in its central portion, a current collection portion 101 in which electrode surfaces of the cells that generate electromotive force alternate in the stacking direction.

In such a SOFC, the electric power generated by each cell is collected to provide a high output. The cell stack 100 has, in its peripheral portion, supply manifolds 102 and exhaust manifolds 103 which extend in the stacking direction. Air is supplied to the electrode surfaces of each cell through the supply manifold 102, and exhausted through the exhaust manifold 103.

In the current collection portion 101, comb-like gas passages are formed on the separators. The comb-like gas passages allow air to flow along each of both surfaces of the cells from the supply manifold 102 to the exhaust manifold 103. Air is distributed to the cells through these comb-like gas passages.

The gas passages lie at right angles to the supply manifold 12 that vertically extends. In addition, the gas passages extend from the air supply manifold 12 and spread in the lateral direction. Therefore, it is not easy to supply air to all of the gas passages uniformly in a stable manner.

Non-uniformity or imbalance in air supply to the gas passages reduces the power generation efficiency and causes local overvoltage. It is therefore required for a SOFC to supply air to the electrode surfaces (air electrodes: cathodes) of the cells as uniformly as possible.

Patent Document 1 discloses passages which are capable of uniformly distributing air to the cathodes of the cells.

In Patent Document 1, as shown in FIG. 2A, a cathode-side separator is made of a highly-conductive flat plate 105 and a slit plate 106 that are pressure-welded to each other. Air headers 107 and fuel headers 108 penetrate the flat plate 105. The fuel headers 108 and a plurality comb-like slits 109 penetrate the slit plate 106. The air header 107 overlaps the end portions of the slits 109, as shown in FIG. 2B. This configuration allows air to be directly introduced from the air header 107 into the slits 109 and to be distributed to the cathodes of the cells.

This configuration, however, requires that the air header 107 be longer than the width of the group of the slits 109, which constitutes a constraint on the design.

For example, it is impossible to form, as shown in FIG. 3, both the air header 107 and the fuel header 108 in a single side portion of the cell stack 100. This makes it difficult to render the cell stack compact in size.

For a SOFC, it is also important to reduce, at the same time, pressure losses of air and electric resistance which is generated when current collection is carried out.

FIG. 4 is a cross-sectional view showing a portion of the cathode-side separator of FIG. 2, as viewed in the direction in which air flows. The separator serving as a current collector which collects electric power from the cell is in pressure contact with the cathode 111 of the cell. In the cross section, the slits 109 each having a width h1 and ribs (current collector ribs 106a) of slit plate 106 each having a width h2 alternate with each other.

An increase in the width h1 of the slits 109 and a decrease in the width h2 of the current collector ribs 106a allow air to flow easily, and consequently, reduce the pressure losses, while increasing regions of the cathode 111 which are in contact with air. Therefore, as indicated by the arrow in FIG. 4, the distance over which currents pass increases, and the electric resistance of the currents that pass, in the cross-sectional direction, through the cathode 111 increases. As a result, the voltage of generated power is reduced.

Conversely, a decrease in the width h1 of the slits 109 and an increase in the width h2 of the current collector ribs 106a result in a decrease in the regions of the cathode 111 which are in contact with air. This reduces the electric resistance of the currents that pass, in the cross-sectional direction, through the cell, while increasing the pressure losses of air. Even if the number of the passages is increased in order to compensate this increase in pressure losses, a larger number of the passages lead to an increase in the total area that is in contact with air, and therefore, the pressure losses of air increase unavoidably.

This results in a need for increasing the output of a blower which supplies air to the cells, for example. Such an increase in the output of the blower causes a sealing defect of a seal closing the air passages and an increase in power consumed for power generation.

It is therefore an object of the present invention to provide a fuel cell unit which is capable of appropriately distributing air to the cathodes of cells while increasing the flexibility of air passage design, and which is capable of reducing, at the same time, pressure losses of air and electric resistance generated when current collection is carried out.

### SOLUTION TO THE PROBLEM

A fuel cell unit disclosed herein includes a plurality of power-generating elements stacked on top of each other. The power-generating element each include a plate-like cell having one principal surface to which an anode is connected and the other principle surface to which a cathode is connected, an anode plate stacked over and electrically connected to the anode, and a cathode plate stacked over and electrically connected to the cathode.

The cathode plate includes a plurality of first gas passages which are adjacent to each other and extend from an end portion of the cell to an opposite end portion of the cell, and thereby serve as passages for a gas containing oxygen, each of the plurality of first gas passages is connected to an associated one of air supply ports located near the end portion of the cell and to an associated one of the air exhaust ports located near the opposite end portion of the cell, and a plurality of second gas passages which are sandwiched between the first gas passages and the cell, which are adjacent to each other and extend in a direction intersecting an extending direction of the first gas passages, which are exposed toward the cell, and each of which communicates with at least two of the first gas passages in a vicinity of an intersection in a direction in which the cathode plate is stacked.

The cathode plate includes a first plate in which the first gas passages are formed, and a second plate which is stacked on the first plate and in which the second gas passages are formed.

The first gas passages may each have an opening penetrating the first plate.

The second gas passages may each have an opening penetrating the second plate and exposed toward the cell.

The first gas passages may each have an opening penetrating the first plate, and the second gas passages may each have an opening penetrating the second plate and exposed toward the cell. A length in the extending direction of each opening in the first plate may be larger than a length in an extending direction of each opening in the second plate. A width perpendicular to the extending direction of each opening in the first plate may be larger than a width perpendicular to the extending direction of each opening in the second plate.

Among the plurality of second gas passages, at least two second gas passages arranged in the extending direction are out of communication with each other in a plane of the second plate.

Among the plurality of second gas passages, two second gas passages which are adjacent to each other in a direction perpendicular to the extending direction each communicate with at least two different first gas passages selected from the plurality of first gas passages.

### ADVANTAGES OF THE INVENTION

The present invention provides a fuel cell unit which is compact and has a high power generation performance.

### BRIEF DESCRIPTION OF THE DRAWINGS

[FIG. 1] FIG. 1 is a perspective view schematically showing an example of conventional fuel cells.
[FIG. 2] FIGS. 2A and 2B are perspective views schematically showing an example of conventional cathode-side separators.
[FIG. 3] FIG. 3 is a plan view of a conventional cell stack which has been made compact.
[FIG. 4] FIG. 4 is a cross-sectional view of a portion of the separator of FIG. 2, as viewed in the direction in which air flows.
[FIG. 5] FIG. 5 is a perspective view schematically showing a fuel cell unit according to an embodiment.
[FIG. 6] FIG. 6 is a cross-sectional view schematically showing a power-generating element, taken along the plane W-W'-W" of FIG. 5.
[FIG. 7] FIG. 7 is an exploded perspective view schematically showing a power-generating element.
[FIG. 8] FIG. 8 is an exploded perspective view schematically showing a cathode plate.
[FIG. 9] FIG. 9 is a schematic plan view of the cathode plate, as viewed in the direction indicated by the arrow V in FIG. 8.
[FIG. 10] FIG. 10 is a schematic view of the portion indicated by the arrow X in FIG. 9.
[FIG. 11] FIG. 11 is a schematic view of the portion indicated by the arrow Y in FIG. 9.
[FIG. 12] FIGS. 12A to 12C are schematic views showing variations of short slits.
[FIG. 13] FIG. 13 is a schematic view showing a variation of a cathode plate.

### DESCRIPTION OF EMBODIMENTS

Embodiments of the present invention will be described below in detail with reference to the drawings. Note that the following embodiments are merely examples in nature, and are not intended to limit the scope, applications, and use of the present invention.

### (Fuel Cell Unit)

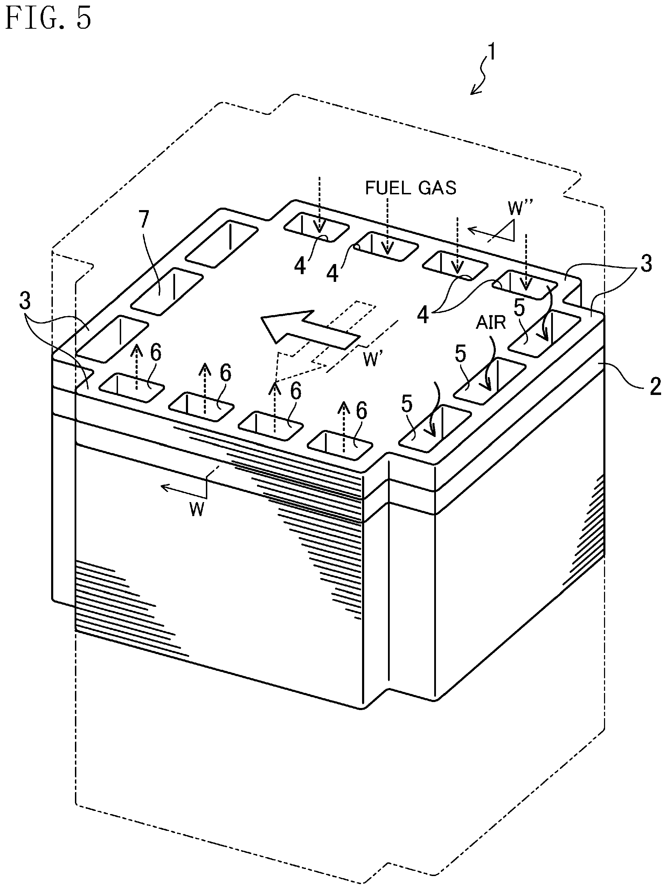

FIG. 5 shows a fuel cell unit according to this embodiment. This fuel cell unit is configured as a planar solid oxide fuel cell (hereinafter, refereed to also as the SOFC) of which a pillar-shaped main portion (a cell stack 1) is comprised of a plurality of power-generating elements 2 each having the function of generating power and stacked on top of each other.

In plan view as viewed in the stacking direction, the cell stack 1 of this SOFC has a cross-shaped outline which surrounds protrusion portions 3 which slightly protrude from the sides of a rectangle. Note that the outline of the cell stack 1 is not limited to this shape, and may be changed as appropriate into, e.g., a rectangular shape or a circular shape in accordance with the specifications.

In the protrusion portions 3 of the cell stack 1, manifolds 4, 5, 6, and 7 which extend in the stacking direction are formed to supply a fuel gas and air to the power-generating elements 2.

Specifically, the fuel supply manifold 4 and the fuel exhaust manifold 6 through which the fuel gas passes are respectively provided in two of the protrusion portions 3 that face each other. The air supply manifold 5 and the air exhaust manifold 7 through which air passes are respectively provided in the other two of the protrusion portions 3 that face each other.

Each of the air supply manifold 5 and the air exhaust manifold 7 is comprised of three vertical holes that are arranged along the associated side and have a rectangular cross section. Each of the fuel supply manifold 4 and the fuel exhaust manifold 6 is comprised of four vertical holes that are arranged along the associated side and have a rectangular cross section. Note that the configurations of the manifolds are not limited to these, and the number and the shape of each manifold may be changed as appropriate in accordance with the specifications.

As indicated by the white arrow, air that passes through the power-generating elements 2 flows from the air supply manifold 5 toward the air exhaust manifold 7. As indicated by the white broken-line arrow, the fuel gas that passes through the power-generating elements 2 flows in the direction intersecting the airflow.

Each power-generating element 2 generates power using the air and the fuel gas. The SOFC, in which the multiple power-generating elements 2 are stacked on top of each other, provides a high output.

### (Power-generating Element)

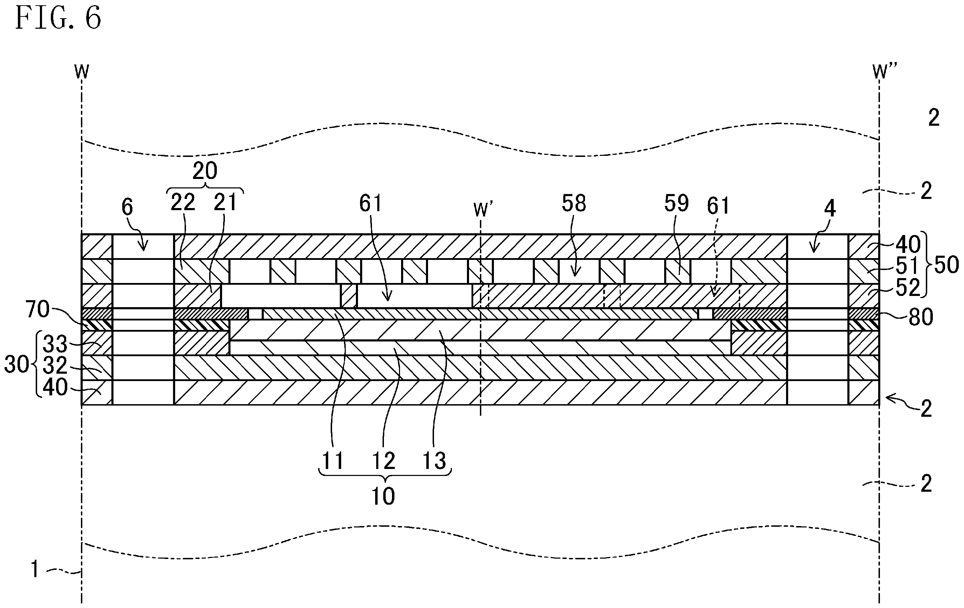

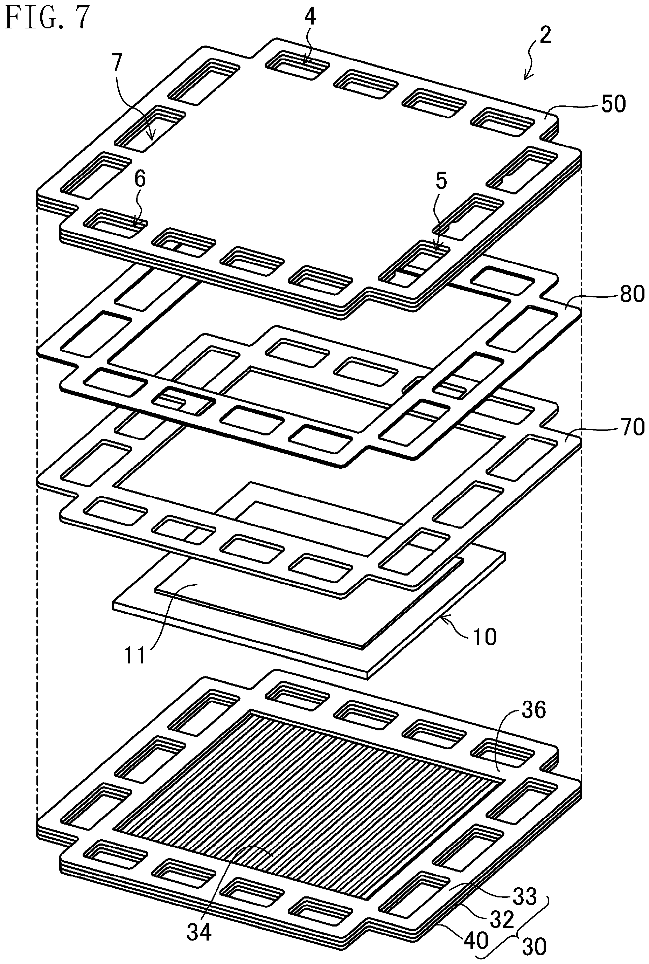

FIGS. 6 and 7 show in detail the power-generating element 2.

The power-generating element 2 is comprised of a cell 10, a cathode plate 50, an anode plate 30, an insulator sheet 70, and a seal member 80, for example. The anode plate 30 and the cathode plate 50 have electrical conductivity and are stacked one above the other with the insulator sheet 70 and the seal member 80 interposed therebetween.

The anode plate 30 includes three plates, that is, a separator plate 40, a separator-side plate 32, and an electrode-side plate 33 that are stacked on top of each other in this order. Each of these plates is made of a rolled stainless steel, for example.

In the anode plate 30, openings which constitute the air supply manifold 5, the fuel supply manifold 4, the fuel exhaust manifold 6, and the air exhaust manifold 7 are formed. The separator plate 40 is a planar member in which only the openings that constitute the air supply manifold 5 and the like are formed. (The details will be described later.) The electrode-side plate 33 has a cell opening 36 in which the cell 10 is housed.

In the central portion of the separator-side plate 32, a plurality of slits 34 which communicate with the fuel supply manifold 4 and the fuel exhaust manifold 6 are formed. The separator-side plate 32 is joined to the separator plate 40, which results in that one opening of each slit 34 is covered.

Further, the electrode-side plate 33 is joined, and the cell 10 is fit into the cell opening 36, which results in that the other opening of each slit 34 is covered. In this manner, a group of narrow grooves serving as anode-side gas passages is formed. The fuel gas flows through the anode-side gas passages along an anode 12 of the cell 10.

The cell 10 is a rectangular plate-like member fit in the cell opening 36. The cell 10 is comprised of a cathode 11, the anode 12, and a solid electrolyte 13 which is interposed between the cathode and the anode and made of yttria-stabilized zirconia and other constituents. The cell 10 has a thickness of about 0.5 mm to 1 mm.

The cathode 11 is configured as a rectangular thin film layer which is a size smaller than the cell 10, and arranged on a surface of the cell 10. The anode 12 has a rectangular shape which is almost as large as the cell 10, and is arranged on the other surface of the cell 10.

The cathode plate 50 and the anode plate 30 function as current collectors. The power generated by the cathode 11 and the anode 12 is collected via the cathode plate 50 and the anode plate 30.

The insulator sheet 70 is made of a material which has good insulating properties, such as mica, and interposed between the anode plate 30 and the cathode plate 50. The seal member 80 is interposed between the cathode plate 50 and the insulator sheet 70 so as to ensure separation between the fuel gas flows and the airflows. Thus, a gap between the cell 10 and the insulator sheet 70 is sealed by the seal member 80.

### (Cathode Plate)

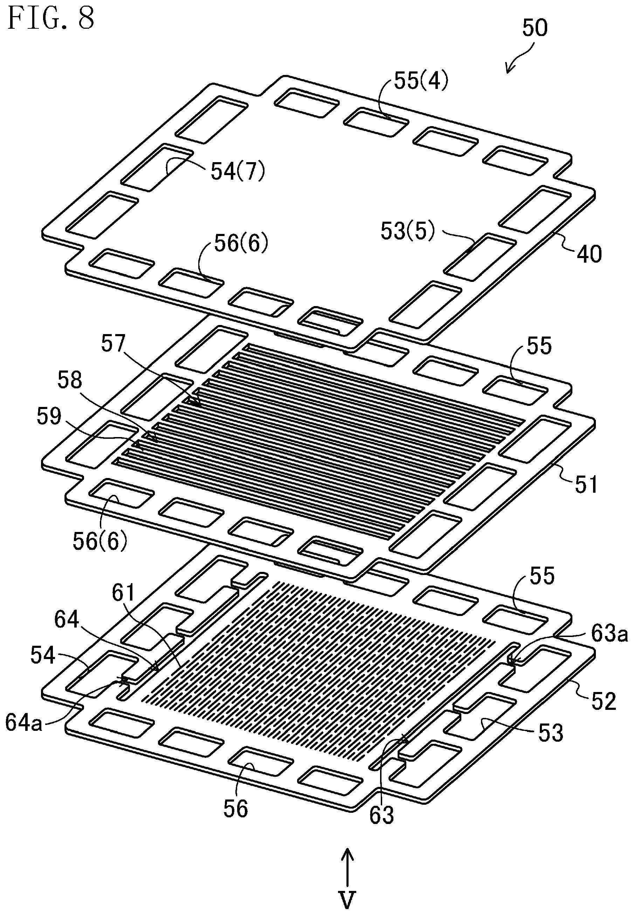

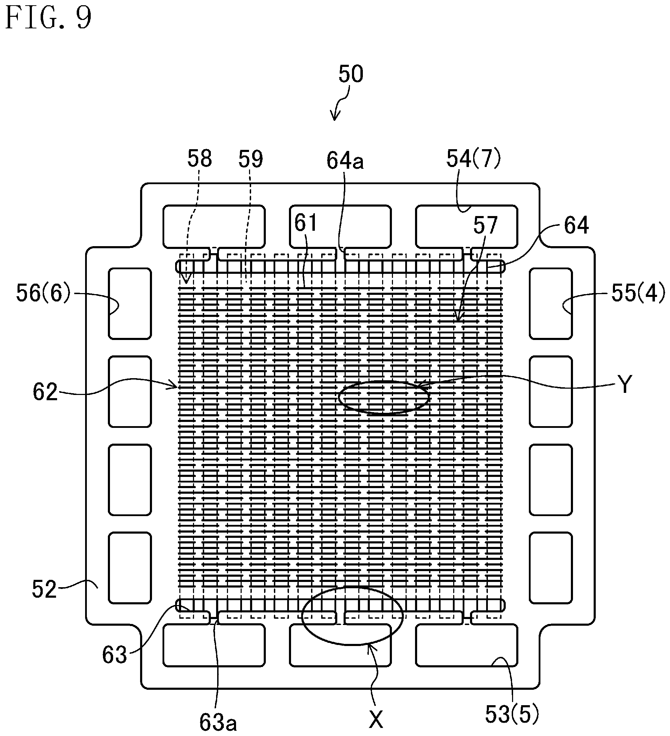

As shown in detail in FIGS. 8 and 9, the cathode plate 50 includes three plates, that is, a first plate 51, a second plate 52, and a separator plate 40 that are stacked on top of each other. Each of these plates 51, 52, and 40 is also made of rolled stainless steel. The outline of each of these plates protrudes in the same manner as the outline of the cell stack 1.

This separator plate 40, which is denoted with the same reference numeral, is the same as the separator plate 40 of the anode plate 30. That is to say, in this cell stack 1, each cathode plate 50 and each anode plate 30 share one single separator plate 40.

In each of the separator plate 40, the first plate 51, and the second plate 52, air supply ports 53, air exhaust ports 54, fuel supply ports 55, and fuel exhaust ports 56 which constitute the air supply manifold 5, the air exhaust manifold 7, the fuel supply manifold 4, and the fuel exhaust manifold 6 are formed.

The first plate 51 has, between the fuel supply ports 55 and the fuel exhaust ports 56, a rectangular region (a region facing the cathode 11, hereinafter referred to also as the current collecting region 57) in which a plurality of long slits 58 are formed to allow air to flow. These long slits 58 extend parallel to one another from the air supply ports 53 toward the air exhaust ports 54, that is, in the direction (hereinafter referred to also as the main flow direction) in which main airflows pass.

Specifically, in the current collecting region 57 of the first plate 51, the plurality of long slits 58 (an example of openings) each of which has a groove-like shape are arranged at a predetermined intervals and parallel to the main flow direction. The long slits 58 are arranged over the entire current collecting region 57 and penetrate the first plate 51. The portions between the adjacent ones of the long slits 58 form long slender current collector ribs 59.

With this structure in which the long slits 58 and the like of the first plate 51 are configured as through holes, the first plate 51 can be formed by simple presswork even if the long slits 58 are required to have a high dimensional accuracy.

In the entire current collecting region 57 of the second plate 52, a plurality of short slits 61 (an example of openings) are formed to allow air to flow in the direction perpendicular to the main flow direction. Each of the short slits 61 is configured as a fine hole which is smaller in width and length than each long slit 58. The short slits 61 are arranged in a piecemeal fashion, and penetrate the second plate 52. The short slits 61 are arranged more densely than the long slits 58, and in a regular and uniform pattern over the entire current collecting region 57. Thus, the short slits 61 form a short-slit group that has a rectangular shape corresponding to the current collecting region 57.

The short-slit group includes short-slit rows 62, each of which is formed by the short slits 61 that are longitudinally aligned. The short-slit rows 62 extend parallel to each other in the direction perpendicular to the main flow direction.

The short slits 61 of one of the short-slit rows 62 are displaced in the alignment direction at a predetermined pitch with respect to the short slits 61 of an adjacent one of the short-slit rows 62.

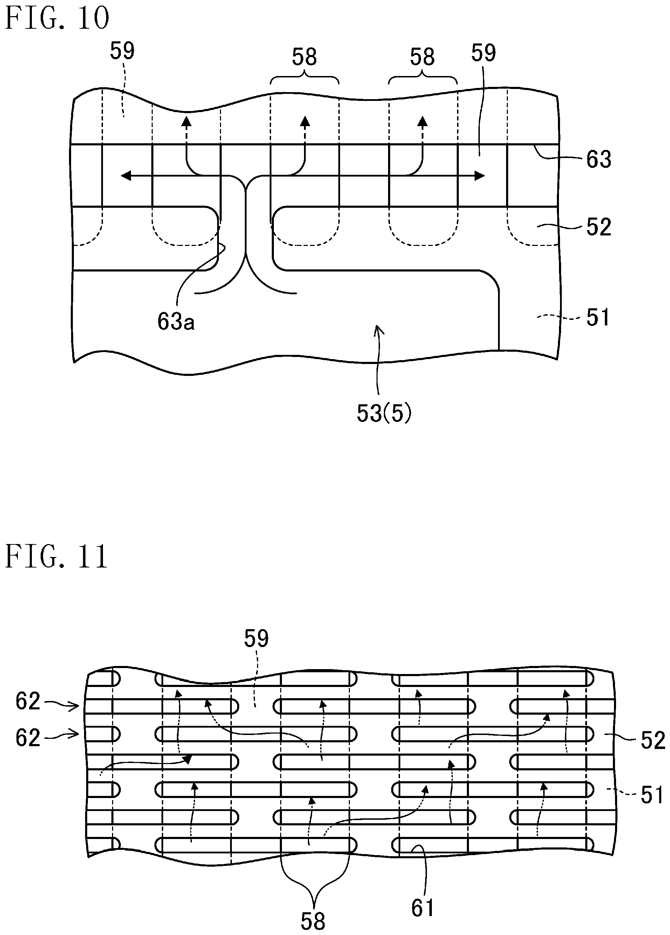

Specifically, as shown in FIG. 11, each short slit 61 has a length which enables the short slit 61 to communicate with associated adjacent two of the long slits 58. Here, attention is paid to successive four of the long slits 58. Two short slits 61 adjacent to each other in one short-slit row 62 are arranged such that one of the short slits 61 is able to communicate with adjacent two of the four long slits 58 and the other of the short slits 61 is able to communicate with the other adjacent two of the four long slits 58.

Between two short slit rows 62 which are adjacent each other, the short slits 61 of one short-slit row 62 are displaced, by a distance corresponding to one long slit 58, with respect to the short slits 61 of the other short-slit row 62. In the second plate 52 of this embodiment, alternate ones of the short-slit rows 62 have the same arrangement of the short slits 61.

In the second plate 52, a long narrow header hole 63 extends perpendicularly to the main flow direction, between the short-slit group and the air supply ports 53. In the second plate 52, a long narrow header hole 64 extends perpendicularly to the main flow direction, between the short-slit group and the air exhaust ports 54. The header hole 63 communicates with the air supply ports 53 via connection holes 63a. The header hole 64 communicates with the air exhaust ports 54 via connection holes 64a. Each of the header holes 63 and 64 has a length equal to or larger than the distance between both ends of the short-slit group, so that the header holes 63 and 64 are able to communicate with all of the long slits 58.

The separator plate 40, the first plate 51, and the second plate 52 are stacked on top of each other and joined together in this order, and thereby form the cathode plate 50. In the cathode plate 50, both surfaces of the first plate 51 in which the plurality of long slits 58 are formed are covered with the separator plate 40 and the second plate 52, which results in the formation of a plurality main passages (an example of first gas passages) through which the main airflows pass.

Since the second plate 52 is in close contact with the first plate 51, the upper opening of each short slit 61 is covered while communication of each short 61 with predetermined adjacent two of the main passages is maintained. As shown in FIG. 7, the cathode plate 50 is stacked over the anode plate 30 with the cell 10 and other components interposed therebetween, thereby the bottom opening of each short slit 61 is covered with the surface of the cathode 11.

In this manner, a plurality of auxiliary passages (an example of second gas passages) is formed in the cathode plate 50. The plurality of auxiliary passages perpendicularly overlaps, in the inside-to-outside direction, the plurality of main passages. The auxiliary passages make the main airflows branch and allow the branch airflows mixed with each other.

As a result, in the current collecting region 57 of each cathode plate 50, cathode-side gas passages which are capable of making air flow lengthwise and breadthwise along the surface of the cathode 11 are formed.

Further, in each cathode plate 50, the header holes 63 and 64 of which the openings of both sides are covered extend respectively between the current collecting region 57 and the air supply ports 53 and between the current collecting region 57 and the air exhaust ports 54, which results in the formation of headers communicating with all of the main passages.

### (Air Intake to Power-generating Elements)

As indicated by the arrows in FIG. 10, air that has flowed through the air supply manifold 5 enters the main passages (the long slits 58) through the connection holes 63a and the header hole 63.

In this cell stack 1, the three air supply ports 53 are arranged side by side, and the total width of the thus arranged air supply ports is smaller than the distance between both ends of the group of the main passages. It would be therefore impossible to distribute air uniformly to all of the main passages if no measures were adopted.

To address this, the header is formed to make the inflow ends of the main passages communicate with each other through the header (the header hole 63). Accordingly, the airflows that are entering the main passages are mixed with each other through the header first, in accordance with the pressure gradient. This contributes to uniformization of flow rates of the airflows entering the main passages.

It is however impossible to make the flow rates of the airflows perfectly uniform only by providing the header because the size of the header is limited. Therefore, the airflows entering the main passages have flow rates that are non-uniform to a certain extent. Thereafter, the airflows enter the current collecting region 57, and flow toward the air exhaust ports 54 while contributing to the reaction through which power is generated.

As indicated by the arrows in FIG. 11, each main passage communicates, via the associated auxiliary passages (short slits 61), with the main passages that extend on its both sides. Therefore, if a pressure gradient exists between these main passages, the airflows passing through the main passages are mixed with each other via the auxiliary passages, thereby making the pressure gradient less steep. Since the auxiliary passages are arranged over the entire current collecting region 57, as the airflows approach the air exhaust ports 54, the pressure gradient disappears.

Therefore, even if the amounts of air that have been distributed to the main passages are non-uniform, such non-uniformity in the airflows is automatically resolved, which allows for effectively distributing air to the cathode 11. This enables efficient power generation, and effective prevention of deterioration of power generation performance and degradation of the cell 10.

In addition, in the current collecting region 57 of the second plate 52 that is in close contact with the surface of the cathode 11, only the short slits 61 that have a significantly small width extend in the direction perpendicular to the main flow direction. As shown in the range between W' and W" in FIG. 6, the portions between two adjacent short-slit rows 62 and 62 are continuous in the direction perpendicular to the main flow direction, from one end to the other of the current collecting region 57. Further, the regions of the cathode 11 that are in contact with are small. This configuration allows for reducing the electric resistance of currents passing through the cell 10.

Since the main airflows pass through the main passages that have a large cross-sectional area, the pressure losses are not increased. Therefore, this fuel cell unit reduces, at the same time, the pressure losses of air and electric resistance that is generated when the current collection is carried out.

In summary, this fuel cell unit includes the cathode plates 50 each of which is comprised of the combination of the first plate 51 that is suitable for reducing the pressure losses and the second plate 52 that is suitable for reducing the electric resistance, and thereby has stacked passages that have different functions. This allows for appropriately distributing air, and reducing both the pressure losses and electric resistance.

Since each cathode plate 50 is comprised of two layers that have different functions, the constraints on the dimension designs of the long slits 58 and the short slit 61 are reduced. Consequently, the design flexibility is increased, which enables more suitable cathode-side gas passages to be formed and allows for improving the power generation performance.

### (Variations)

The fuel cell unit of the present invention is not limited to the above-described embodiment, and includes various different configurations.

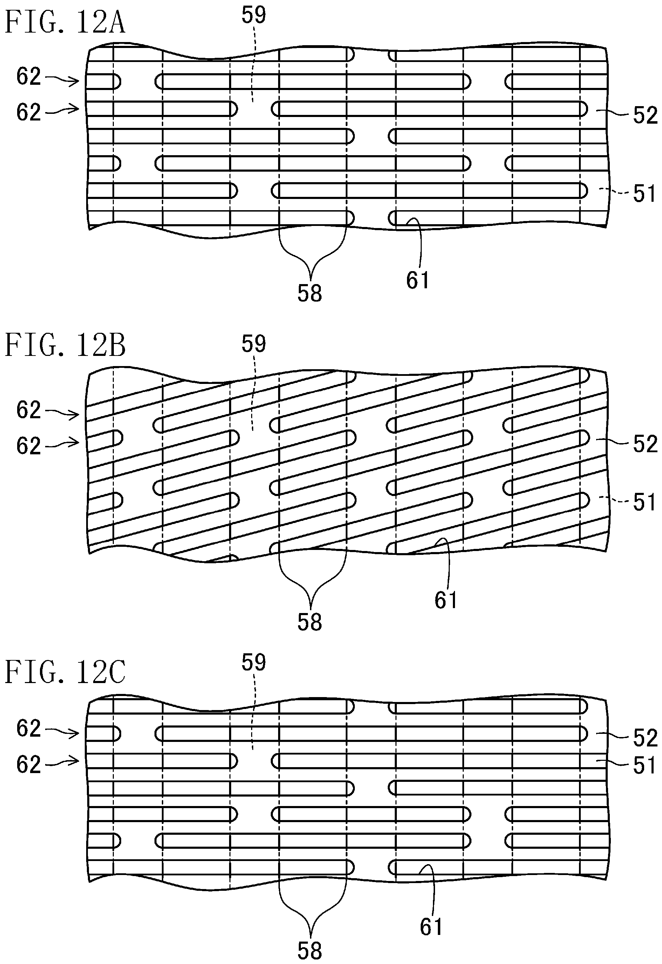

The shape and arrangement of the short slits (the auxiliary passages) may be changed as appropriate in accordance with specifications. For example, as shown in FIG. 12A, each short slit 61 may have a length which allows the short slit 61 to communicate with three adjacent long slits 58. Further, each short slit 61 may have a length which allows the short slit 61 to communicate with four or more adjacent long slits 58.

As shown in FIG. 12B, the short slits 61 may be oblique to the long slits 58, instead of being perpendicular to the long slits 58. Further, the shape and arrangement of the short slits 61 may be partially varied. The number of the short slits 61 may be different from portion to portion.

As shown in 12C, the short slits 61 do not necessarily have to have the same length. The short slits 61 may have different lengths. Not only the length but also the width and shape of the short slits 61 do not have to be the same.

Since the airflows that have entered the main passages are made uniform, the arrangements and shapes of the air supply ports and the headers can be freely designed.

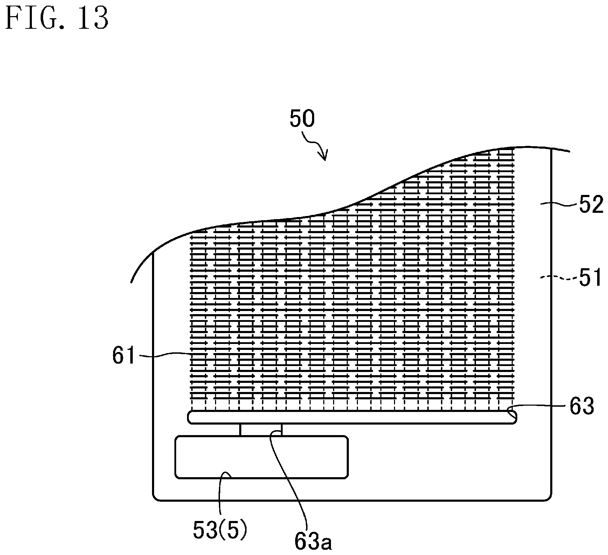

For example, even a cell stack which is reduced in size by positioning an air manifold in a portion of its side as shown in FIG. 13 can provide sufficient advantages. In addition, headers are not essential.

The long slits do not necessarily have to penetrate the first plate 51. For example, multiple narrow grooves having a bottom which are formed on the plate surface by half etching may be used as the long slits.

### DESCRIPTION OF REFERENCE CHARACTERS

- 1: Cell Stack (Fuel Cell Unit)
- 2: Power-generating Element
- 4: Fuel Supply Manifold
- 5: Air Supply Manifold
- 6: Fuel Exhaust Manifold
- 7: Air Exhaust Manifold
- 10: Cell
- 11: Cathode
- 12: Anode
- 30: Anode Plate
- 40: Separator Plate
- 50: Cathode Plate
- 51: First Plate
- 52: Second Plate
- 57: Current Collecting Region
- 58: Long Slit (Opening of First Gas Passage)
- 61: Short Slit (Opening of Second Gas Passage)
- 62: Short-slit Row
- 63, 64: Header Hole
- 70: Insulator Sheet
- 80: Seal Member

## Claims

1. A fuel cell unit (1) comprising a plurality of power-generating elements (2) stacked on top of each other,
the power-generating elements (2) each including
- a plate-like cell (10) having one principal surface to which an anode (12) is connected and the other principle surface to which a cathode (11) is connected,
- an anode plate (30) stacked over and electrically connected to the anode (12), and
- a cathode plate (50) stacked over and electrically connected to the cathode (11), wherein the cathode plate (50) includes:
- a plurality of first gas passages which are adjacent to each other and extend from an end portion of the cell (10) to an opposite end portion of the cell (10) and thereby serve as passages for a gas containing oxygen, and which are each connected to an associated one of air supply ports (53) located near the end portion of the cell (10) and to an associated one of the air exhaust ports (54) located near the opposite end portion of the cell (10),
- a plurality of second gas passages which are sandwiched between the first gas passages and the cell (10), which are adjacent to each other and extend in a direction intersecting an extending direction of the first gas passages, which are exposed toward the cell (10), and each of which communicates with at least two of the first gas passages in a vicinity of an intersection in a direction in which the cathode plate (50) is stacked,
- a first plate (51) in which the first gas passages are formed, and
- a second plate (52) which is stacked on the first plate (51) and in which the second gas passages are formed.

2. The fuel cell unit (1) of claim 1,
wherein the first gas passages each have an opening (58) penetrating the first plate (51).

3. The fuel cell unit (1) of claim 1 or 2,
wherein the second gas passages each have an opening (61) penetrating the second plate (52) and exposed toward the cell (10).

4. The fuel cell unit (1) of claim 1,
- wherein the first gas passages each have an opening (58) penetrating the first plate (51),
- wherein the second gas passages each have an opening (61) penetrating the second plate (52) and exposed toward the cell (10),
- wherein a length in the extending direction of each opening (58) in the first plate is larger than a length in an extending direction of each opening (61) in the second plate (52), and
- wherein a width perpendicular to the extending direction of each opening (58) in the first plate (51) is larger than a width perpendicular to the extending direction of each opening (61) in the second plate (52).

5. The fuel cell unit (1) of any one of claims 1 to 4,
wherein among the plurality of second gas passages, at least two second gas passages arranged in the extending direction are out of communication with each other in a plane of the second plate (52).

6. The fuel cell unit (1) of any one of claims 1 to 4,
wherein among the plurality of second gas passages, two second gas passages which are adjacent to each other in a direction perpendicular to the extending direction each communicate with at least one common first gas passage selected from the plurality of first gas passages and with at least two different first gas passages selected from the plurality of first gas passages.

## Patentansprüche

1. Kraftstoffzelleinheit (1), umfassend eine Vielzahl von übereinander gestapelten, Leistung erzeugenden Elementen (2),
wobei die Leistung erzeugenden Elemente (2) jeweils Folgendes aufweisen:
- eine plattenartige Zelle (10) mit einer Hauptoberfläche, mit der eine Anode (12) verbunden ist, und eine andere Hauptoberfläche, mit der eine Kathode (11) verbunden ist,
- eine Anodenplatte (30), die über die Anode (12) gestapelt und mit dieser elektrisch verbunden ist, und
- eine Kathodenplatte (50), die über die Kathode (11) gestapelt und mit dieser elektrisch verbunden ist,
wobei die Kathodenplatte (50) folgendes aufweist:
- eine Vielzahl von ersten Gasdurchlässen, die zueinander benachbart sind und sich von einem Endabschnitt der Zelle (10) zu einem entgegengesetzten Endabschnitt der Zelle (10) erstrecken und dadurch als Durchlässe für ein sauerstoffhaltiges Gas dienen und die jeweils mit einem dazugehörigen Luftzufuhranschluss (53), der sich in der Nähe des Endabschnitts der Zelle (10) befindet, und mit einem dazugehörigen Luftauslassanschluss (54), der sich in der Nähe des entgegengesetzten Endabschnitts der Zelle (10) befindet, verbunden sind,
- eine Vielzahl von zweiten Gasdurchlässen, die sandwichartig zwischen den ersten Gasdurchlässen und der Zelle (10) angeordnet sind, die zueinander benachbart sind und sich in eine Richtung erstrecken, die die Erstreckungsrichtung der ersten Gasdurchlässe kreuzt, die zur Zelle (10) hin freiliegen und deren jeder mit zumindest zwei der ersten Gasdurchlässe in einer näheren Umgebung einer Kreuzung in einer Richtung kommuniziert, in der die Kathodenplatte (50) gestapelt ist,
- eine erste Platte (51), in der die ersten Gasdurchlässe ausgebildet sind, und
- eine zweite Platte (52), die auf die erste Platte (51) gestapelt ist und in der die zweiten Gasdurchlässe ausgebildet sind.

2. Kraftstoffzelleinheit (1) nach Anspruch 1, wobei die ersten Gasdurchlässe jeweils eine Öffnung (58) aufweisen, die die erste Platte (51) durchdringt.

3. Kraftstoffzelleinheit (1) nach Anspruch 1 oder 2, wobei die zweiten Gasdurchlässe jeweils eine Öffnung (61) aufweisen, die die zweite Platte (52) durchdringt und die in zur Zelle (10) hin freiliegt.

4. Kraftstoffzelleinheit (1) nach Anspruch 1,
wobei die ersten Gasdurchlässe jeweils eine Öffnung (58) aufweisen, die die erste Platte (51) durchdringt,
wobei die zweiten Gasdurchlässe jeweils eine Öffnung (61) aufweisen, die die zweite Platte (52) durchdringt und zur Zelle (10) hin freiliegt,
wobei eine Länge in Erstreckungsrichtung jeder Öffnung (58) in der ersten Platte größer ist als eine Länge in einer Erstreckungsrichtung jeder Öffnung (61) der zweiten Platte (52) und
wobei eine Breite senkrecht zur Erstreckungsrichtung jeder Öffnung (58) in der ersten Platte (51) größer ist als eine Breite senkrecht zur Erstreckungsrichtung jeder Öffnung (61) in der ersten Platte (52).

5. Kraftstoffzelleinheit (1) nach einem der Ansprüche 1 bis 4, wobei von der Vielzahl an zweiten Gasdurchlässen zumindest zwei zweite Gasdurchlässe, die in der Erstreckungsrichtung angeordnet sind, in einer Ebene der zweiten Platte (52) nicht mehr in Kommunikation miteinander stehen.

6. Kraftstoffzelleinheit (1) nach einem der Ansprüche 1 bis 4, wobei von der Vielzahl an zweiten Gasdurchlässen zwei zweite Gasdurchlässe, die zueinander in einer Richtung senkrecht auf die Erstreckungsrichtung benachbart sind, jeweils mit zumindest einem gemeinsamen ersten Gasdurchlass, der aus der Vielzahl an ersten Gasdurchlässen ausgewählt ist, und mit zumindest zwei verschiedenen ersten Gasdurchlässen kommunizieren, die aus der Vielzahl an ersten Gasdurchlässen ausgewählt sind.

## Revendications

1. Unité de pile à combustible (1) comprenant une pluralité d'éléments de production d'énergie (2) empilés les uns sur les autres,
les éléments de production d'énergie (2) incluant chacun
- une pile en forme de plaque (10) ayant une surface principale à laquelle une anode (12) est reliée et l'autre surface principale à laquelle une cathode (11) est reliée,
- une plaque d'anode (30) empilée sur l'anode (12) et reliée électriquement à celle-ci, et
- une plaque de cathode (50) empilée sur la cathode (11) et reliée électriquement à celle-ci,
dans laquelle
la plaque de cathode (50) inclut :
- une pluralité de premiers canaux de gaz qui sont adjacents les uns aux autres et s'étendent depuis une partie d'extrémité de la pile (10) jusqu'une partie d'extrémité opposée de la pile (10) et servent ainsi de canaux pour un gaz contenant de l'oxygène, et qui sont chacun reliés à un associé d'orifices d'admission d'air (53) situés près de la partie d'extrémité de la pile (10) et à un associé des orifices d'évacuation de l'air (54) situés près de la partie d'extrémité opposée de la pile (10),
- une pluralité de seconds canaux de gaz qui sont intercalés entre les premiers canaux de gaz et la pile (10), qui sont adjacents les uns aux autres et s'étendent dans une direction coupant une direction d'extension des premiers canaux de gaz, qui sont exposés vers la pile (10), et chacun communique avec au moins deux des premiers canaux de gaz à proximité d'une intersection dans une direction dans laquelle la plaque de cathode (50) est empilée,
- une première plaque (51) dans laquelle les premiers canaux de gaz sont formés, et
- une seconde plaque (52) qui est empilée sur la première plaque (51) et dans laquelle les seconds canaux de gaz sont formés.

2. Unité de pile à combustible (1) selon la revendication 1,
dans laquelle les premiers canaux de gaz ont chacun une ouverture (58) pénétrant dans la première plaque (51).

3. Unité de pile à combustible (1) selon la revendication 1 ou 2,
dans laquelle les seconds canaux de gaz ont chacun une ouverture (61) pénétrant dans la seconde plaque (52) et exposée vers la pile (10).

4. Unité de pile à combustible (1) selon la revendication 1,
- dans laquelle les premiers canaux de gaz ont chacun une ouverture (58) pénétrant dans la première plaque (51),
- dans laquelle les seconds canaux de gaz ont chacun une ouverture (61) pénétrant dans la seconde plaque (52) et exposée vers la pile (10),
- dans laquelle une longueur dans la direction d'extension de chaque ouverture (58) dans la première plaque est plus grande qu'une longueur dans une direction d'extension de chaque ouverture (61) dans la seconde plaque (52), et
- dans laquelle une largeur perpendiculaire à la direction d'extension de chaque ouverture (58) dans la première plaque (51) est plus grande qu'une largeur perpendiculaire à la direction d'extension de chaque ouverture (61) dans la seconde plaque (52).

5. Unité de pile à combustible (1) selon l'une quelconque des revendications 1 à 4,
dans laquelle parmi la pluralité de seconds canaux de gaz, au moins deux seconds canaux de gaz agencés dans la direction d'extension ne sont pas en communication les uns avec les autres dans un plan de la seconde plaque (52).

6. Unité de pile à combustible (1) selon l'une quelconque des revendications 1 à 4,
dans laquelle parmi la pluralité de seconds canaux de gaz, deux seconds canaux de gaz qui sont adjacents les uns aux autres dans une direction perpendiculaire à la direction d'extension communiquent chacun avec au moins un premier canal de gaz commun choisi parmi la pluralité de premiers canaux de gaz et avec au moins deux différents premiers canaux de gaz choisis parmi la pluralité de premiers canaux de gaz.
